# EUROPÄISCHE PATENTSCHRIFT

(11) **EP 0 630 785 B1**
(45) Veröffentlichungstag und Bekanntmachung des Hinweises auf die Patenterteilung: **27.08.1997**
(21) Anmeldenummer: 94109368.4
(22) Anmeldetag: 17.06.1994
(51) Int. Cl.: B60R 25/04

(54) **Motorsteuerungsanlage für Kraftfahrzeuge**
Apparatus for controlling of a motor for vehicles
Appareil de commande d'un moteur pour véhicules

(30) Priorität: 23.06.1993 DE 4320776
(43) Veröffentlichungstag der Anmeldung: 28.12.1994
(73) Patentinhaber: ADAM OPEL AG, 65423 Rüsselsheim (DE)
(72) Erfinder: Hubertus, Guido, Dipl.-Ing. (FH), D-65239 Hochheim (DE)
(74) Vertreter: Bergerin, Ralf, Dipl.-Ing.

(56) Entgegenhaltungen:
- EP-A- 0 437 101
- DE-A- 3 610 954
- DE-C- 3 620 297
- DE-U- 9 306 777
- DE-U- 9 314 256

## Beschreibung

Die Erfindung bezieht sich auf eine Diebstahlsicherung für Kraftfahrzeuge, mit einem Motorsteuergerät zur Steuerung von Motorfunktionen, insbesondere Kraftstoffeinspritzung und/oder -pumpe, und mit den im Oberbegriff des Patentanspruchs 1 angegebenen, weiteren Merkmalen.

Zur Sicherung des Fahrzeugs, z. B. gegen Diebstahl, ist es bekannt, eine Wegfahrsperre (Immobilisation; Startsperre) vorzusehen. Diese arbeitet, wie beispielsweise in der DE 36 20 297 C1 beschrieben, auf der Basis einer Unterbrecherschaltung bzw. anders bezeichnet eines Wegfahrsicherungs-Steuergerätes, das nach Erkennen des zum Fahrzeug gehörenden Schlüssels ein codiertes Signal an das die Motorfunktionen steuernde Motorsteuergerät gibt. Wird das übergebene Signal vom Motorsteuergerät als richtig (d. h. als übereinstimmend mit dem eingespeicherten Signal) erkannt, so gibt das Motorsteuergerät die Einspritzung und/oder die Kraftstoffpumpe frei und der Motor kann gestartet werden. Stimmen dagegen die beiden Signale nicht überein, so bleiben die genannten Motorfunktionen gesperrt. Die Unterbrecherschaltung kann, wie in der DE 36 20 297 C1 gezeigt, in das Gehäuse des Motorsteuergerätes integriert sein, so daß das Motorsteuergerät zugleich als Immobilisator Verwendung findet.

Die Kontaktierung der Ein- und Ausgänge des Motorsteuergerätes erfolgt über Vielpolsteckverbinder. Beispielsweise 35 Ein- und Ausgänge können so an das Motorsteuergerät bzw. Die Unterbrecherschaltung angeschlossen werden (dazu: Autoelektrik, Autoelektronik am Ottomotor / Bosch - 1. Ausg. - Düsseldorf: VDI-Verlag, 1987).

Ein Eingang des Motorsteuergerätes dient beispielsweise zur Auswertung von dem Motorsteuergerät zuzuführenden Wegstreckensignalen. Dieser Eingang arbeitet auf einen Mikroprozessor mit Port, welcher in der Lage ist, zeitlich veränderliche Signale zu verarbeiten.

Im Fall der DE 36 20 297 C1 wird zumindest ein Teil der Ein- und Ausgänge unterbrochen, wenn der genannte Steckverbinder von nicht Autorisierten abgezogen wird. Zusätzlich unterbricht die zur Immobilisation dienende Unterbrecherschaltung gegebenenfalls einen Funtkions- und/oder Steuerkreis oder Strom- und/oder Spannungskreis des Motorsteuergerätes, wozu ein separates Eingangssignal erforderlich ist (von einem Zylinderschloß oder einer Tastatur oder einer Fernbedienung).

Aufgabe der vorliegenden Erfindung ist es, bei einem Fahrzeug, das mit einem Motorsteuergerät zur Steuerung von Motorfunktionen ausgerüstet ist, ohne großen zusätzlichen Aufwand eine Wegfahrsicherung (nach dem im Vorstehenden umrissenen Prinzip) vorzusehen.

Gemäß der Erfindung wird die Aufgabe bei einer Motorsteuerungsanlage der eingangs bezeichneten Art dadurch gelöst, daß das Motorsteuergerät zugleich als Immobilisator (Startsperre) verwendet wird, derart, daß der Eingang mit Mikroprozessor und Port während der Startphase, d. h. bei üblicherweise unbewegtem Fahrzeug, zum Einlesen und Auswerten eines codierten Signals dient. Durch die Erfindung wird also der nach dem bisherigen Stand der Technik erforderliche separate Eingang mit Mikroprozessor und Port zum Einlesen und Auswerten eines codierten Signals am Motorsteuergerät eingespart.

Die Funktion des Eingangs für codierte Signale wird von dem zur Auswertung des Wegstreckensignals ohnehin vorhandenen Eingang übernommen. Dieser Eingang, inklusive Mikroprozessor und Port, steht während der Startphase zur Verfügung, denn er wird zur Auswertung der Wegstreckensignale nur bei laufendem Motor benötigt.

In praktischer Ausgestaltung der Erfindung wird vorgeschlagen, daß ein Wegfahrsicherungs(WFS)-Steuergerät vorgesehen ist, über das die (nur bei bewegtem Fahrzeug anfallenden) Wegstreckensignale zum Motorsteuergerät geführt werden. Das WFS-Steuergerät zeichnet sich durch eine derartige Konzeption aus, daß es beim Einschalten der Zündung den berechtigten Fahrer erkennt, daraufhin über seine Elektronik das durch das Steuergerät geführte Wegstreckensignal unterbricht und ein codiertes Signal zum Motorsteuergerät gibt.

Diese Konzeption läßt sich vorteilhafterweise dadurch praktisch verwirklichen, daß im Schlüsselkopf des Zündschlüssels ein Transponder angeordnet ist, der einen vorzugsweise unveränderlichen Identifikationscode besitzt, und daß am Zündschloß eine Antenne angebracht ist, die von dem Transponder angeregt wird, derart, daß der Identifikationscode batterielos auslesbar ist.

In weiterer Ausgestaltung der Erfindung soll das WFS-Steuergerät nur dann (vom Motorsteuergerät) wieder auf das Wegstreckensignal umschaltbar sein, wenn das vom Motorsteuergerat eingelesene codierte Signal nach Vergleich mit dem im Motorsteuergerät eingespeicherten Code als übereinstimmend erkannt worden ist und die wichtigen Motorsteuerfunktionen daraufhin vom Motorsteuergerät freigegeben worden sind.

Als codiertes Signal dient vorzugsweise ein Frequenzcode mit vier Blöcken, in denen jeweils vier unterschiedliche Frequenzen übertragen werden können. Dadurch ergeben sich 256 Codemöglichkeiten, und eine Manipulation des codierten Signals ist somit nahezu ausgeschlossen.

In der Zeichnung sind - jeweils in Form eines Blockschaltbilds - Ausführungsbeispiele der Erfindung dargestellt, die im folgenden beschrieben werden. Es zeigt:
- Fig. 1: eine Ausführungsform einer Wegfahrsicherung (Immobilisation), in Gesamtdarstellung (schematisch)
und
- Fig. 2: eine Ausführungsform eines hierzu verwendeten Steuergeräts (Immobilizer), in separater Darstellung.

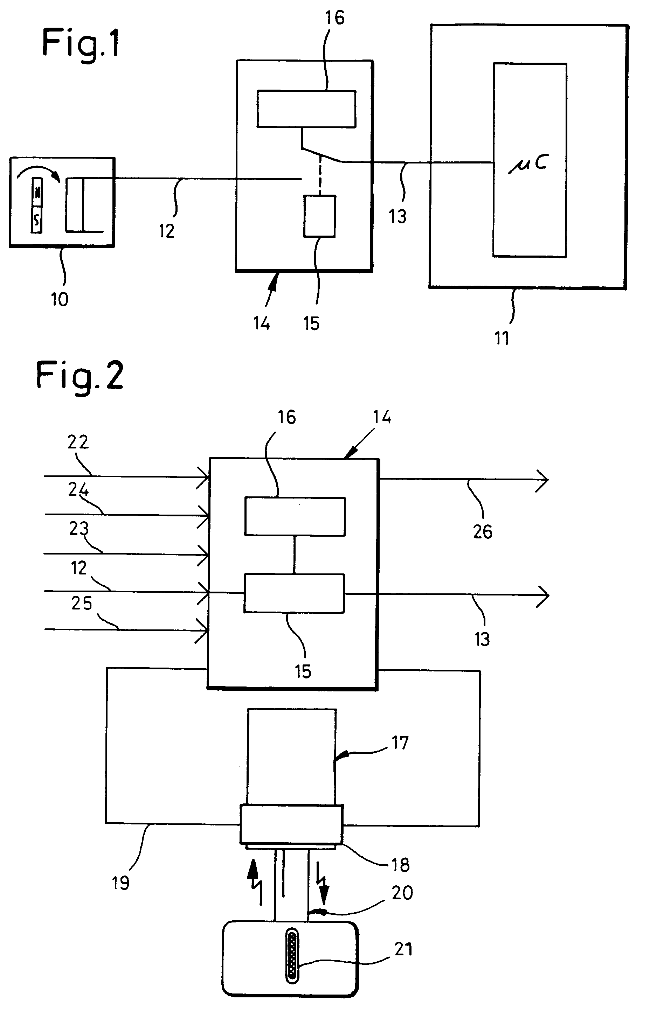

In Figur 1 bezeichnet 10 einen Wegstreckensignalgeber, der bei fahrendem Fahrzeug ein entsprechendes Wegstreckensignal an ein Motorsteuergerät 11 abgibt. Das Motorsteuergerät 11 steuert die wichtigen Motorfunktionen, wie z. B. Kraftstoffeinspritzung und -pumpe. Die Leitung zur Übertragung des Wegstreckensignals vom Geber 10 zum Motorsteuergerät 11 ist durch zwei Linien 12, 13 symbolisiert. Zwischen dem Wegstreckengeber 10 und dem Motorsteuergerät 11 ist ein Steuergerät 14 (sogenannter Immobilizer) angeordnet, der einen Umschalter 15 enthält. Der Umschalter 15 dient dazu, die Wegstreckensignalleitung 12, 13 - wie in Figur 1 gezeigt - während des Startvorganges zu unterbrechen, um die eigentliche Funktion des Steuergeräts 14 als Startsperre zu ermöglichen (siehe hierzu insbesondere weiter unten die ausführliche Beschreibung der Funktion des Steuergeräts 14 gemäß Figur 2). Hierzu wird die Signalleitung 13 und damit auch das Motorsteuergerät 11 an einen im Steuergerät 14 eingespeicherten Frequenzcode angeschlossen, der in Figur 1 durch einen Kasten 16 symbolisiert ist.

In Figur 2 bezeichnet 17 insgesamt das Zündschloß eines Kraftfahrzeuges. Ein im Sinne der Erfindung wichtiger Bestandteil des Zündschlosses 17 ist eine schematisch angedeutete Antenne 18, die über eine Leitung 19 mit dem Steuergerät 14 verbunden ist. In dem Zündschloß 17 steckt ein Zündschlüssel 20, der mit einem Transponder 21 bestückt ist. Der Transponder 21 weist eine den berechtigten Besitzer ausweisende Kennung auf, die von der Antenne 18 erkannt und an das Steuergerät 14 übermittelt wird.

Das Steuergerät 14 liegt über zwei Klemmen 22, 23 an Spannung und über eine Klemme 24 an Masse. Außer der bereits erwähnten Wegstreckensignalleitung 12, 13 (mit zwischengeschaltetem Umschalter 15) sind an das Steuergerät 14 noch eine sogenannte bidirektionale Datenleitung 25 und eine zu einer Kontrolleuchte (nicht dargestellt) führende Leitung 26 angeschlossen.

Die Motorsteuerungsanlage mit Startsperre (Wegfahrsicherung) arbeitet nun im einzelnen wie folgt. Bei Einschalten der Zündung, d. h. Einstecken des Zündschlüssels 20 in das Zündschloß 17 und Drehen des Zündschlüssels 20 (Klemme 23 aktiv), wird der im Transponder 21 abgelegte unveränderliche Identifikationscode von der am Zündschloß 17 aufgebrachten Spule (Antenne 18) durch Anregung derselben batterielos ausgelesen. Erkennt die Antenne 18 den Code als richtig, so sendet das Steuergerät 14 einen bei 16 gespeicherten Frequenzcode zum Motorsteuergerät 11. Der Frequenzcode wird vom Motorsteuergerät 11 über den (vorher entsprechend durch den Umschalter 15 umgeschalteten) Eingang 13 des Wegstreckensignals eingelesen. Der Frequenzcode (16) wird vom Motorsteuergerät 11 ausgewertet. Hierbei wird der im Motorsteuergerät 11 gespeicherte Code mit dem gesendeten Frequenzcode (16) verglichen. Wenn der Frequenzcode (16) als richtig erkannt wird, d. h. gesendeter Frequenzcode (16) und gespeichert Code stimmen überein, gibt das Motorsteuergerät 11 die entsprechenden Motorfunktionen (insbesondere Kraftstoffeinspritzung und -pumpe) frei, und das Fahrzeug kann gestartet werden.

Für die Dauer der Frequenzcodeübertragung zum Motorsteuergerät 11 wird also das Wegstreckensignal 12, 13 (durch den Umschalter 15) unterbrochen. Die Auswertung des Frequenzcodes (16) kann vom Motorsteuergerät 11 während der normalen Abarbeitung des Startvorganges durchgeführt werden. Es tritt keine Startverzögerung auf. Ist der Motor bereits vor Ende der vollständigen Übertragung des Frequenzcodes (16) startbereit, so springt der Motor an. Nach Ende der Übertragung des Frequenzcodes (16) max. 1,5 Sek. entscheidet das Motorsteuergerät 11, ob die Motorsteuerfunktion abgebrochen wird (falsche Übertragung) oder ob die Motorsteuerfunktion weitergeführt werden soll (richtige Übertragung). Für den Fall, daß der Motor bereits in Funktion war, wird er bei Abbruch der Motorsteuerfunktion sofort abgeschaltet.

Mit Beendigung der Frequenzcodeübertragung verbindet der Umschalter 15 die beiden Leitungsstränge 12, 13 wieder miteinander, und die Anlage ist damit auf Empfang der Wegstreckensignale (10) umgeschaltet.

Vorzugsweise wird für den Frequenzcode (16) ein Signal mit vier Blöcken mit jeweils vier möglichen Frequenzen verwendet. Es ergeben sich dadurch insgesamt 256 Codemöglichkeiten, so daß Manipulationen des codierten Signals nahezu ausgeschlossen werden können.

Am Ende des Kraftfahrzeug-Montagebandes werden die beiden Steuergeräte 11, 14 aufeinander abgestimmt.

## Patentansprüche

1. Diebstahlsicherung für Kraftfahrzeuge mit einem elektronischen Motorsteuergerät (11), das zumindest einen Eingang für in der Startphase nicht benötigte Signale aufweist, welcher auf einen Mikroprozessor mit Port arbeitet, wobei der Mikroprozessor in der Lage ist, zeitlich veränderbare Signale zu verarbeiten und mit einer Unterbrecherschaltung, so daß das Motorsteuergerät (11) zugleich als Immobilisator (Startsperre) verwendet wird, derart daß wenigstens eine betriebswesentliche Funktion des Motorsteuergerätes (11) sperrbar ist, **dadurch gekennzeichnet**, daß der vorhandene Eingang mit Mikroprozessor und Port während der Startphase, d. h. bei unbewegtem Fahrzeug, zum Einlesen und Auswerten eines codierten Signals (16) dient.

2. Diebstahlsicherung für Kraftfahrzeuge nach Anspruch 1, **dadurch gekennzeichnet**, daß ein Wegfahrsicherungs(WFS)-Steuergerät (14) vorgesehen ist, über das die codierten Signale (16) dem Eingang des Motorsteuergerätes (11) zugeführt werden.

3. Diebstahlsicherung für Kraftfahrzeuge nach einem der Ansprüche 1 oder 2, **dadurch gekennzeichnet**, daß der Eingang des Motorsteuergerätes (11) ein Eingang für Wegstreckensignale (12, 13) ist.

4. Diebstahlsicherung für Kraftfahrzeuge nach Anspruch 3, **gekennzeichnet durch** eine derartige Konzeption des WFS-Steuergerätes (14), daß dieses beim Einschalten der Zündung den berechtigten Fahrer erkennt, daraufhin über seine Elektronik (15) den durch das WFS-Steuergerät (14) geführten Eingang für das Wegstreckensignal (12, 13) unterbricht und über diesen das codierte Signal (16) zum Motorsteuergerät (11) gibt.

5. Diebstahlsicherung für Kraftfahrzeuge nach Anspruch 4, **dadurch gekennzeichnet**, daß der unterbrochene Eingang für das Wegstreckensignal (12, 13) nur dann wieder vom WFS-Steuergerät (14) anschaltbar ist, wenn das dem Motorsteuergerät (11) zugeführte codierte Signal (16) nach Vergleich mit einem im Motorsteuergerät (11) eingespeicherten Code als übereinstimmend erkannt worden ist und die betriebswesentlichen Funktionen des Steuergerätes (11) daraufhin freigegeben worden sind.

6. Diebstahlsicherung für Kraftfahrzeuge nach einem oder mehreren der vorstehenden Ansprüche, **dadurch gekennzeichnet**, daß als codiertes Signal (16) ein Frequenzcode dient.

7. Diebstahlsicherung für Kraftfahrzeuge nach zumindest einem der vorstehenden Ansprüche, **dadurch gekennzeichnet**, daß im Schlüsselkopf eines Zündschlüssels (20) ein Transponder (21) angeordnet ist, der einen Identifikationscode besitzt und daß am Zündschloß (17) eine Antenne (18, 19) angebracht ist, die von dem Transponder (21) angeregt wird, derart daß der Identifikationscode batterielos auslesbar ist.

## Claims

1. Anti-theft device for motor vehicles with an electronic engine control device (11) comprising at least one input for signals not needed at the starting stage which operates on a microprocessor with port, the microprocessor being capable of processing signals which are variable in time, and with a contact breaker circuit, so that the engine control device (11) is simultaneously used as an immobiliser (starting lock) such that at least one function of the engine control device (11) essential to operation can be locked, characterised in that the existing input with microprocessor and port serves during the starting stage, i.e. when the vehicle is not moving, to read in and analyse a coded signal (16).

2. Anti-theft device for motor vehicles according to claim 1, characterised in that an anti-drive-off control device (14) is provided, via which the coded signals (16) are fed to the input of the engine control device (11).

3. Anti-theft device for motor vehicles according to either of claims 1 or 2, characterised in that the input of the engine control device (11) is an input for distance signals (12, 13).

4. Anti-theft device for motor vehicles according to claim 3, characterised by a design of the anti-drive-off control device (14) such that the latter recognises the authorised driver when the ignition is switched on, thereupon via its electronics (15) interrupts the input passed through the anti-drive-off control device (14) for the distance signal (12, 13) and via this input feeds the coded signal (16) to the engine control device (11).

5. Anti-theft device for motor vehicles according to claim 4, characterised in that the interrupted input for the distance signal (12, 13) can be connected again by the anti-drive-off control device (14) only if the coded signal (16) fed to the engine control device (11) after comparison with a code stored in the engine control device (11) has been recognised as matching and the functions of the control device (11) essential to operation have thereupon been released.

6. Anti-theft device for motor vehicles according to one or more of the preceding claims, characterised in that a frequency code serves as a coded signal (16).

7. Anti-theft device for motor vehicles according to one or more of the preceding claims, characterised in that in the key head of an ignition key (20) is arranged a transponder (21) which has an identification code and in that on the ignition lock (17) is mounted an aerial (18, 19) which is excited by the transponder (21), such that the identification code can be read without the battery.

## Revendications

1. Protection contre le vol pour des véhicules automobiles, avec un appareil électronique (11) de commande du moteur qui est pourvu d'au moins une entrée pour des signaux qui ne sont pas nécessaires dans la phase de démarrage reliée à un microprocesseur à canaux, le microprocesseur étant capable de traiter des signaux qui évoluent dans le temps, et avec un circuit interrupteur tel que l'appareil (11) de commande du moteur est utilisé simultanément comme moyen d'immobilisation (verrou de contact), de telle sorte qu'au moins une fonction essentielle pour le fonctionnement de l'appareil (11) de commande du moteur soit inhibée, caractérisée par le fait que l'entrée liée au microprocesseur à canaux, pendant la phase de démarrage, c'est-à-dire lorsque le véhicule est immobile, sert à la lecture et à l'exploitation d'un signal (16) codé.

2. Protection contre le vol pour des véhicules automobiles selon la revendication 1, caractérisée par le fait qu'un appareil (14) de blocage du démarrage (WFS) est prévu, appareil par l'intermédiaire duquel les signaux (16) codés sont transmis à l'entrée de l'appareil (11) de commande du moteur.

3. Protection contre le vol pour des véhicules automobiles selon l'une des revendications 1 ou 2, caractérisée par le fait que l'entrée de l'appareil (11) de commande du moteur est une entrée pour signaux de route (12, 13).

4. Protection contre le vol pour des véhicules automobiles selon la revendication 3, caractérisée par une conception de l'appareil (14) de blocage de démarrage telle que ledit appareil lors de l'actionnement du contact reconnaît le conducteur autorisé puis, par l'intermédiaire de son électronique (15), coupe l'entrée pour le signal de route (12, 13) qui transite par l'appareil (14) de blocage du démarrage et délivre par celle-ci le signal (16) codé à l'appareil (11) de commande du moteur.

5. Protection contre le vol pour des véhicules automobiles selon la revendication 4, caractérisée par le fait que l'entrée coupée pour le signal de route (12, 13) ne peut être commandée par l'appareil (14) de blocage de démarrage que lorsque le signal (16) codé envoyé à l'appareil (11) de commande du moteur, après comparaison avec un code mémorisé dans l'appareil (11) de commande du moteur a été reconnu comme valide et que les fonctions essentielles pour le fonctionnement de l'appareil (11) de commande ont été libérées.

6. Protection contre le vol pour des véhicules automobiles selon une ou plusieurs des revendications précédentes, caractérisée par le fait que l'on utilise un code à fréquences comme signal (16) codé.

7. Protection contre le vol pour des véhicules automobiles selon au moins une des revendications précédentes, caractérisée par le fait qu'un répondeur (21) d'identification qui possède un code d'identification est disposé dans la tête d'une clé de contact (20) et par le fait qu'une antenne (18, 19) est disposée sur la serrure de contact (17), laquelle antenne est excitée par le répondeur (21) d'identification de telle sorte que le code d'identification puisse être lu sans batterie.
